# EUROPEAN PATENT APPLICATION

(11) **EP 4 274 237 A1**
(43) Date of publication of application: **08.11.2023**
(21) Application number: 22745266.1
(22) Date of filing: 26.01.2022
(51) Int. Cl.: H04N 21/2187, G06F 3/0484, G06F 3/0481

(54) **INFORMATION DISPLAY METHOD AND APPARATUS, AND DEVICE AND MEDIUM**

(30) Priority: 26.01.2021 CN 202110105796
(71) Applicant: BEIJING BYTEDANCE NETWORK TECHNOLOGY CO., LTD., Beijing 100041 (CN)
(72) Inventor: CAI, Jiatian, Beijing 100190 (CN); LIU, Wenjing, Beijing 100190 (CN); ZHANG, Qiang, Beijing 100190 (CN); JIANG, Xiangzhou, Beijing 100190 (CN); JIANG, Haitian, Beijing 100190 (CN)
(74) Representative: Dentons UK and Middle East LLP
(86) International application number: PCT/CN2022/073981
(87) International publication number: WO 2022/161393

(57) **Abstract**

The present disclosure relates to an information display method and apparatus, and a device and a storage medium. The information display method comprises: displaying a target interface, wherein the target interface comprises a public screen region and a control region, and the public screen region is used for displaying at least one piece of public screen information; receiving an information trigger operation on target public screen information in the public screen information; and in response to the information trigger operation, displaying the target public screen information in a first target region of the target interface, wherein the first target region comprises a region in the target interface other than the public screen region and the control region. According to the embodiments of the present disclosure, it is possible to ensure that each participant clearly views target public screen information, thereby facilitating interaction between the participants, and further improving the interaction atmosphere during a leisure entertainment process.

## Description

The present disclosure claims the priority to Chinese patent application No. 202110105796.7, titled "INFORMATION DISPLAY METHOD, APPARATUS AND DEVICE, AND MEDIUM", filed on January 26, 2021 with the China National Intellectual Property Administration, which is incorporated herein by reference in its entirety.

### FIELD

The present disclosure relates to the field of Internet technology, and in particular to an information display method, apparatus and device, and a medium.

### BACKGROUND

With the rapid development of computer technology and mobile communication technology, various social platforms based on an electronic device have been widely used, greatly enriching people's daily lives. A user may enjoy leisure and entertainment conveniently through various social platforms, such as watching a live video, making an audio and video call and chatting in a chat room.

In the leisure and entertainment process, the user may communicate with other participants by sending text information. However, if a large amount of information is received by other participants and the information is updated quickly, the information sent by the user may be overwhelmed by a large amount of information, which is not beneficial to an interaction between the user and other participants and reduces an interactive atmosphere in the leisure and entertainment process.

### SUMMARY

In order to solve or at least partially solve the above technical problems, an information display method, apparatus and device, and a medium are provided according to the present disclosure.

In a first aspect, an information display method is provided according to the present disclosure. The method includes:
displaying a target interface, where the target interface includes a comment region and a control region, and the comment region is configured to display at least one piece of comment region information;
receiving an information trigger operation on target comment region information in the comment region information; and
displaying the target comment region information in a first target region of the target interface in response to the information trigger operation, where the first target region includes a region of the target interface other than the comment region and the control region.

In a second aspect, an information display method is provided according to the present disclosure. The method includes:
displaying a target interface, where the target interface includes a comment region and a control region, and the comment region is configured to display at least one piece of comment region information; and
displaying target comment region information in a first target region of the target interface in a case of determining that the comment region information includes the target comment region information, where the first target region includes a region of the target interface other than the comment region and the control region.

In a third aspect, an information display apparatus is provided according to the present disclosure. The apparatus includes a first display unit, a first receiving unit and a second display unit.

The first display unit is configured to display a target interface, where the target interface includes a comment region and a control region, and the comment region is configured to display at least one piece of comment region information.

The first receiving unit is configured to receive an information trigger operation on target comment region information in the comment region information.

The second display unit is configured to display the target comment region information in a first target region of the target interface in response to the information trigger operation, where the first target region includes a region of the target interface other than the comment region and the control region.

In a fourth aspect, an information display apparatus is provided according to the present disclosure. The apparatus includes a third display unit and a fourth display unit.

The third display unit is configured to display a target interface, where the target interface includes a comment region and a control region, and the comment region is configured to display at least one piece of comment region information.

The fourth display unit is configured to display target comment region information in a first target region of the target interface in a case of determining that the comment region information includes the target comment region information, where the first target region includes a region of the target interface other than the comment region and the control region.

In a fifth aspect, an information display device is provided according to the present disclosure. The device includes a processor and a memory configured to store executable instructions.

The processor is configured to read the executable instructions from the memory and execute the executable instructions to implement the information display method according to the first aspect or the second aspect.

In a sixth aspect, a computer readable storage medium storing a computer program is provided according to the present disclosure. The computer program, when executed by a computing device, causes the computing device to implement the information display method according to the first aspect or the second aspect.

Compared with the conventional technology, the technical solutions according to the embodiments of the present disclosure have the following advantages.

In the information display method, apparatus and device, and the medium according to the embodiments of the present disclosure, in response to receiving an information trigger operation on target comment region information displayed in a comment region of a target interface, the target comment region information may be displayed in a first target region of the target interface other than the comment region and a control region, thus achieving an effect of pinning the target comment region information at a top position of the virtual room. Since the target comment region information in the first target region is not overwhelmed by a large amount of information, it can be ensured that all participants can clearly see the target comment region information, which is beneficial to an interaction among all participants, and thus improves an interactive atmosphere in the leisure and entertainment process.

### BRIEF DESCRIPTION OF THE DRAWINGS

In conjunction with the drawings and with reference to the following embodiments, the above and other features, advantages and aspects of the embodiments of the present disclosure are more apparent. Throughout the drawings, the same or similar reference numbers refer to the same or similar elements. It should be understood that the drawings are schematic and that the components and elements are not necessarily drawn to scale.
Figure 1 is a diagram of an information display architecture according to an embodiment of the present disclosure;
Figure 2 is a schematic flowchart of an information display method according to an embodiment of the present disclosure;
Figure 3 is a schematic diagram of a live broadcast interface according to an embodiment of the present disclosure;
Figure 4 is a schematic diagram of an information trigger operation according to an embodiment of the present disclosure;
Figure 5 is a schematic diagram of a live broadcast interface according to another embodiment of the present disclosure;
Figure 6 is a schematic diagram of a live broadcast interface according to another embodiment of the present disclosure;
Figure 7 is a schematic diagram of a moving operation according to an embodiment of the present disclosure;
Figure 8 is a schematic diagram of an interactive operation process according to an embodiment of the present disclosure;
Figure 9 is a schematic flowchart of an information display method according to another embodiment of the present disclosure;
Figure 10 is a schematic structural diagram of an information display apparatus according to an embodiment of the present disclosure;
Figure 11 is a schematic structural diagram of an information display apparatus according to another embodiment of the present disclosure; and
Figure 12 is a schematic structural diagram of an information display device according to an embodiment of the present disclosure.

### DETAILED DESCRIPTION OF EMBODIMENTS

The embodiments of the present disclosure are described in detail below with reference to the drawings. Although some embodiments of the present disclosure are shown in the drawings, it should be understood that the present disclosure may be implemented in various forms and should not be limited to the embodiments. The embodiments are provided for thoroughly and completely understanding the present disclosure. It should be understood that the drawings and the embodiments of the present disclosure are exemplary and are not intended to limit the protection scope of the present disclosure.

It should be understood that the steps in the method embodiments of the present disclosure may be performed in different orders and/or in parallel. In addition, the method embodiments may include an additional step and/or an omitted step that is not shown herein. The scope of the present disclosure is not limited in this aspect.

The term "include" and its variations in the present disclosure mean open-ended inclusion, that is, "including but not limited to". The term "based on" means "based at least in part on". The term "one embodiment" means "at least one embodiment". The term "another embodiment" means "at least one additional embodiment". The term "some embodiments" means "at least some embodiments". The definitions of other terms are provided in the following descriptions.

It should be noted that the concepts such as "first" and "second" mentioned in the present disclosure are used to distinguish different devices, modules or units, and are not used to limit an sequential order or interdependence of the functions performed by the devices, modules or units.

It should be noted that the modifications such as "one" and "multiple" mentioned in the present disclosure are illustrative and not restrictive. Those skilled in the art should understand that the modifications should be understood as "one or more" unless otherwise expressly indicated in the context.

The name of a message or information exchanged between devices in the embodiments of the present disclosure are only for illustrative purposes, and are not intended to limit the scope of the message or information.

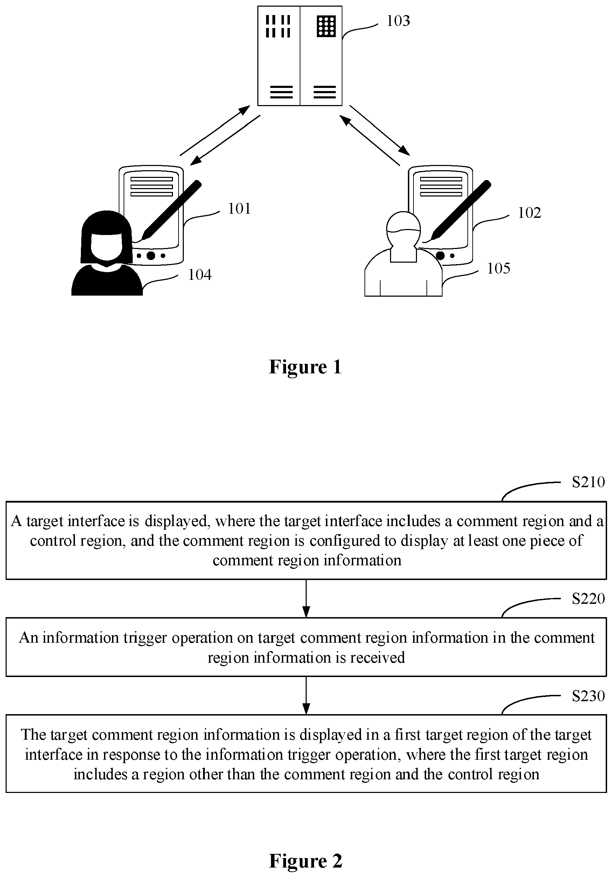

An information display method according to the present disclosure may be applied to an architecture shown in Figure 1, which is described in detail in conjunction with Figure 1.

Figure 1 shows a diagram of an information display architecture according to an embodiment of the present disclosure.

As shown in Figure 1, the information display architecture may include at least one first electronic device 101 and at least one second electronic device 102 of a client side and a server 103 of a server side. The first electronic device 101 and the second electronic device 102 may establish a connection and exchange information with the server 103 through a network protocol such as Hyper Text Transfer Protocol over Secure Socket Layer (HTTPS). The first electronic device 101 and the second electronic device 102 may include a device with a communication function such as a mobile phone, a tablet computer, a desktop computer, a notebook computer, an in-vehicle terminal, a wearable electronic device, an all-in-one computer, and a smart home device, or may be a device simulated with a virtual machine or an emulator. The server may be a device with storage and computing functions such as a cloud server or a server cluster.

Based on the above architecture, the server 103 may provide a service for a designated platform, which may be a designated website or a designated application. A first user 104 may log on to the designated platform through the first electronic device 101 and manage a virtual room for leisure and entertainment on the designated platform. A second user 105 may log on to the designated platform through the second electronic device 102 and enter the virtual room managed by the first user 104. The second user 105 may communicate with other participants by sending text information in the virtual room.

In the leisure and entertainment process of the first user 104 in the virtual room through the first electronic device 101, the first electronic device 101 may display a target interface. The target interface may include a comment region and a control region. The comment region may be configured to display at least one piece of comment region information. When the first user 104 wants to pin target comment region information in the comment region information on a top position of the virtual room, an information trigger operation may be performed on the target comment region information. The first electronic device 101 may receive the information trigger operation on the target comment region information, and then display the target comment region information in a first target region of the target interface in response to the information trigger operation. The first target region may include a region of the target interface other than the comment region and the control region.

In the leisure and entertainment process of the second user 105 in the virtual room through the second electronic device 102, a target interface may be displayed on the second electronic device 102. The target interface may include a comment region and a control region. The comment region may be configured to display at least one piece of comment region information. Moreover, target comment region information may be displayed in a first target region of the target interface in the case that the second electronic device 102 determines that the comment region information includes the target comment region information. The first target region may include a region of the target interface other than the comment region and the control region.

Therefore, in the embodiments of the present disclosure, target comment region information may be displayed in a first target region of a target interface other than a comment region and a control region, thus achieving an effect of pinning the target comment region information at the top of the virtual room. Since the target comment region information in the first target region is not overwhelmed by a large amount of information, it can be ensured that all participants can clearly see the target comment region information, which is beneficial to an interaction among all participants, and thus improves an interactive atmosphere in the leisure and entertainment process.

In some embodiments of the present disclosure, the architecture shown in Figure 1 may be applied to a network platform with video live function. The virtual room may be a live room. The first user 104 may be an anchor user or an administrator user of the live room. The second user 105 may be a viewing user. The comment region information may be comment information or bullet screen information.

Therefore, the architecture shown in Figure 1 may be applied to a video live scene. The anchor user or the administrator user may pin the comment region information that he wants the viewing user to pay attention to, at the top of the virtual room, and then may interact with the viewing user based on the comment region information. Thus, the case in which the viewing user cannot clearly see the comment region information that the anchor user wants the viewing user to pay attention to since the comment region information is overwhelmed is avoided, which is beneficial to an interaction between the anchor user and the viewing user, and thus improves an interactive atmosphere in a live video broadcast process.

In other embodiments of the present disclosure, the architecture shown in Figure 1 may be applied to a network platform with instant messaging function. The virtual room may be a conversation room, which may be used to chat among multiple people or make an audio and video call. The first user 104 may be an administrator user of the conversation room, the second user 105 may be a member user of the conversation room, and the comment region information may be conversation information.

Therefore, the architecture shown in Figure 1 may be applied to a multi-person conversation scene. The administrator user may pit the comment region information that he wants the member user to pay attention to, at the top of the virtual room, and then may interact with the member user based on the comment region information. Thus, the case in which the member user cannot clearly see the comment region information that the administrator user wants the member user to pay attention to since the comment information is overwhelmed is avoided, which is beneficial to an interaction between the administrator user and the member user, and thus improves an interactive atmosphere in a multi-person conversation process.

Based on the above architecture, an information display method according to embodiments of the present disclosure is described below in conjunction with Figures 2 to 8.

In an embodiment of the present disclosure, the information display method may be executed by an electronic device, such as the first electronic device 101 in the client shown in Figure 1. The electronic device may include a device with communication function such as a mobile phone, a tablet computer, a desktop computer, a notebook computer, an in-vehicle terminal, a wearable device, an all-in-one computer, and a smart home device, or may include a device simulated with a virtual machine or an emulator.

Figure 2 shows a schematic flowchart of an information display method according to an embodiment of the present disclosure.

As shown in Figure 2, the information display method may include the following steps S210 to S230.

In S210, a target interface is displayed, where the target interface includes a comment region and a control region, and the comment region is configured to display at least one piece of comment region information.

In an embodiment of the present disclosure, the target interface may be a room interface corresponding to a virtual room where a user is located.

In the case that the virtual room is a live room, the target interface may be a live room interface. In the case that the virtual room is a conversation room, the target interface may be a conversation interface.

In an embodiment, in the process of the user entering the virtual room and staying in the virtual room, the electronic device may display the target interface corresponding to the virtual room.

In some embodiments of the present disclosure, the target interface may include a comment region and a control region.

The comment region may be configured to display at least one piece of comment region information.

In an embodiment, the comment region information in the virtual room may be temporarily stored in a server. For example, the comment region information may be temporarily stored in a comment region server. The comment region server may be a server configured to temporarily store the comment region information corresponding to the respective virtual rooms.

In the process of the user entering the virtual room and staying in the virtual room, the electronic device may poll and pull the comment region information corresponding to the virtual room from the server such as the comment region server; and display, after acquiring the comment region information corresponding to the virtual room, the acquired comment region information in the comment region of the target interface.

In the case that the virtual room is the live room, the comment region information may be comment information or bullet screen information. In the case that the virtual room is the conversation room, the comment region information may be conversation information.

In an embodiment, the comment region information may include a comment region message and user information of a user who sends the comment region message. The user information may include at least one of a user's avatar and a user's nickname.

In an embodiment, the comment region information may be displayed on the target interface. For example, the comment region information may be displayed in the comment region of the target interface in a superimposed manner.

Further, the control region may be configured to display at least one function control.

In an embodiment, the control region may include at least one control sub-region. Each control sub-region may be located at a display position of the target interface. Multiple control sub-regions do not overlap.

For example, the control region may include two control sub-regions, i.e., a top control region and a bottom control region. The top control region may be located at the top of the target interface, and the bottom control region may be located at the bottom of the target interface.

In an embodiment, the function control may include at least one of a comment input box control, a like control, a favorite control, a gift sending control, a forwarding control, an information display control of a virtual room, an online user display control of the virtual room, a red envelope control and the like.

It should be noted that the function control may further include a control configured to implement other interactive functions for the virtual room, which is not limited here.

In an embodiment, the function control may be displayed on the target interface. For example, the function control may be displayed in the control region of the target interface in the superimposed manner.

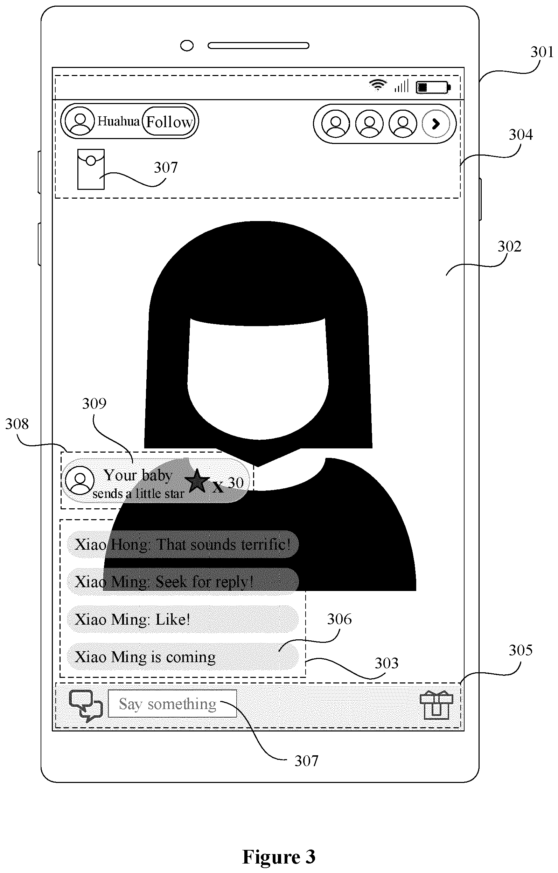

Figure 3 shows a schematic diagram of a live broadcast interface according to an embodiment of the present disclosure.

As shown in Figure 3, a live room interface 302 may be displayed on an electronic device 301. The live room interface 302 may include a comment region 303, a top control region 304 and a bottom control region 305. The top control region 304 may be set at the top of the live room interface 302, and the bottom control region 305 may be set at the bottom of the live room interface 302. The comment region 303 may be set above the bottom control region 305 in left alignment with the live room interface 302, i.e., a bottom boundary of the comment region 303 is higher than a top boundary of the bottom control region 305. Four pieces of comment information 306 may be displayed in the comment region 303. Multiple function controls 307 may be displayed in the top control region 304 and the bottom control region 305. respectively.

In other embodiments of the present disclosure, the target interface may further include a gift display region, which may be configured to display at least one piece of gift information.

The gift display region may be set adjacent to the comment region. For example, the gift display region may be located above, below, at the left or the right of the comment region.

In an embodiment, the gift information in the virtual room may be temporarily stored in a server. For example, the gift information may be temporarily stored in a gift server. The gift server may be configured to temporarily store the gift information corresponding to each virtual room.

In a process of the user entering the virtual room and staying in the virtual room, the electronic device may poll and pull the gift information corresponding to the virtual room from the server such as the gift server; acquire the gift information corresponding to the virtual room; and then display the acquired gift information in the gift display region of the target interface.

In an embodiment, the gift information may include a virtual gift and user information of a user who sends the virtual gift. The user information may include at least one of a user's avatar and a user's nickname.

In an embodiment, the gift information may be displayed on the target interface. For example, the gift information may be displayed in the gift display region of the target interface in the superimposed manner.

Referring to Figure 3, the live broadcast room interface 302 may further include a gift display region 308. The gift display region 308 may be set above and be left-aligned with the comment region 303, i.e., a bottom boundary of the gift display region 308 is higher than a top boundary of the comment region 303. One piece of gift information 309 may be displayed in the gift display region 308.

In S220, an information trigger operation on target comment region information in the comment region information is received.

In an embodiment of the present disclosure, when the user wants to pin target comment region information in the comment region information at a top position of the virtual room, an information trigger operation may be performed on the target comment region information. The electronic device may receive the information trigger operation on the target comment region information.

In some embodiments of the present disclosure, the comment region information may be directly displayed on the target interface.

In an embodiment, the information trigger operation may include an operation on the comment region information, such as clicking, long-pressing or double-clicking the comment region information or dragging the comment region information outside the comment region,.

In other embodiments of the present disclosure, each comment region information may be displayed in a first information display box. The first information display box may be displayed on the target interface. For example, the first information display box may be displayed on the target interface in the superimposed manner, so that the comment region information may be displayed on the target interface in the superimposed manner.

A display parameter, such as a shape, a color or transparency, of the first information display box may be set as required, which is not limited here.

In an embodiment, the information trigger operation may further include an operation on the first information display box to which the comment region information belongs, such as clicking, long-pressing or double-clicking the first information display box, or dragging the first information display box outside the comment region.

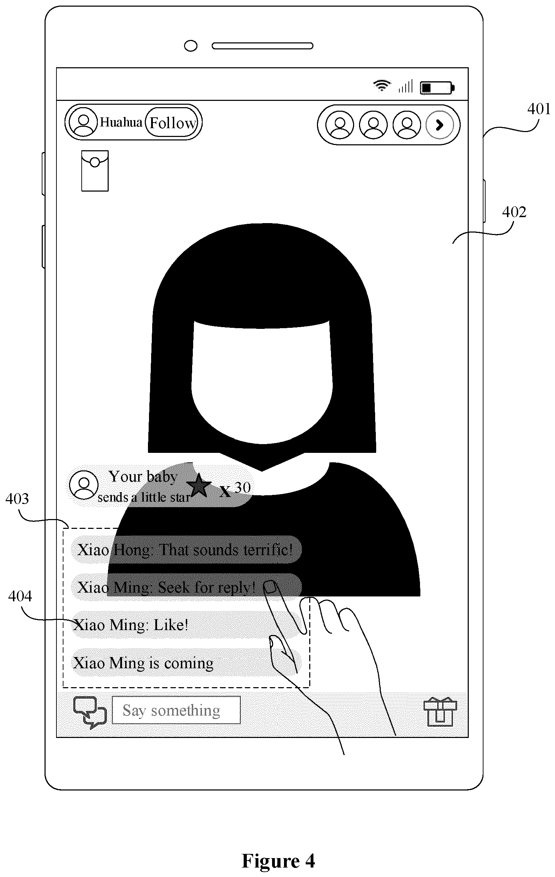

Figure 4 shows a schematic diagram of an information trigger operation according to an embodiment of the present disclosure.

As shown in Figure 4, a live room interface 402 may be displayed on an electronic device 401. The live room interface 402 may include a comment region 403. Four pieces of comment information may be displayed in the comment region 403, such as comment information "Xiao Hong: That sounds terrific!", comment information "Xiao Ming: Seek for reply!", comment information "Xiao Ming: Like!" and comment information "Xiao Ming is coming". When the user wants to pin the comment information "Xiao Ming: Seek for reply!" in the comment region 403 at the top position of the virtual room, a first information display box 404 to which the comment information "Xiao Ming: Seek for reply!" belongs may be clicked, to trigger pining the comment information "Xiao Ming: Seek for reply!" at the top position of the virtual room.

In S230, the target comment region information is displayed in a first target region of the target interface in response to the information trigger operation, where the first target region includes a region of the target interface other than the comment region and the control region.

In an embodiment of the present disclosure, after receiving the information trigger operation on the target comment region information, the electronic device may display the target comment region information in the first target region of the target interface in response to the information trigger operation.

In the case that the target interface includes a comment region and a control region, the first target region may include a region of the target interface other than the comment region and the control region.

In some embodiments, the first target region may include any region other than the comment region and the control region.

In other embodiments, in the case that the control region includes a control sub-region with a bottom boundary higher than a top boundary of the comment region, the first target region may include a region between the bottom boundary of the control sub-region and the top boundary of the comment region.

In the case that the target interface includes a comment region, a control region and a gift display region, the first target region may include any region other than the comment region, the control region and the gift display region.

In other embodiments, in the case that the control region includes a control sub-region with a bottom boundary higher than a highest top boundary of the comment region and the gift display region, the first target region may include a region between the bottom boundary of the control sub-region and the highest top boundary of the comment region and the gift display region.

In some embodiments of the present disclosure, the target comment region information may be directly displayed on the target interface. For example, the target comment region information may be displayed in the first target region of the target interface in the superimposed manner.

In other embodiments of the present disclosure, the target comment region information may be displayed in a second information display box. The second information display box may be displayed on the target interface. For example, the second information display box may be displayed on the target interface in the superimposed manner, so that the target comment region information may be displayed on the target interface in the superimposed manner.

A display parameter such as a shape, a color or a transparency of the second information display box may be set as required, which is not limited here.

In an embodiment of the present disclosure, the electronic device may display the target comment region information at a preset display position in the first target region.

The preset display position may include any display position in the first target region.

In one example, the preset display position may include any vertex angle of the first target region. For example, the preset display position may include an vertex angle at the upper left of the first target region.

In another example, the preset display position may further include a center of any boundary of the first target region. For example, the preset display position may include a center of a top boundary of the first target region.

In some embodiments of the present disclosure, in S230, after receiving the information trigger operation on the target comment region information, the electronic device may directly display the target comment region information in a first target region in response to the information trigger operation.

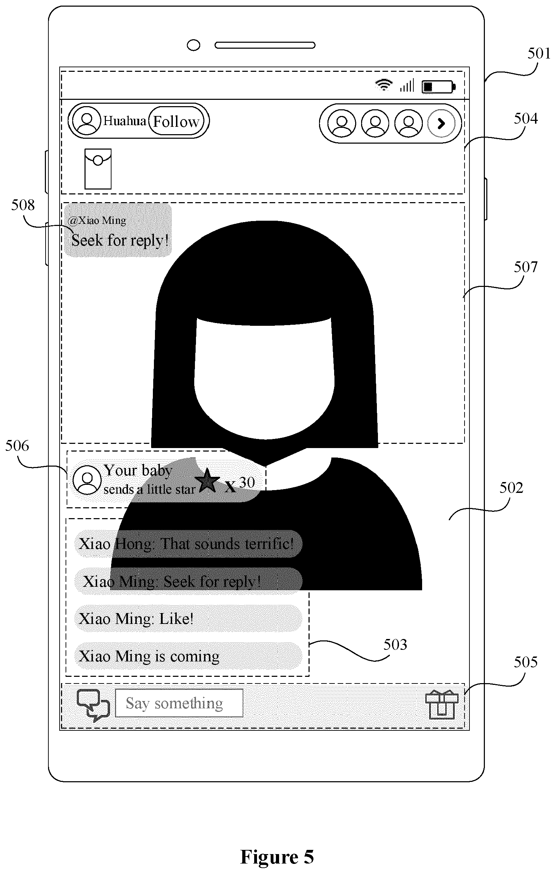

Figure 5 shows a schematic diagram of a live broadcast interface according to another embodiment of the present disclosure.

As shown in Figure 5, a live room interface 502 may be displayed on an electronic device 501. The live broadcast room interface 502 may include a comment region 503, a top control region 504, a bottom control region 505, a gift display region 506 and a first display region 507. The top control region 504 may be set at the top of the live room interface 502, and the bottom control region 505 may be set at the bottom of the live room interface 502. The comment region 503 may be set above the bottom control region 505 in left alignment with the live room interface 502, i.e., a bottom boundary of the comment region 503 is higher than a top boundary of the bottom control region 505. The gift display region 506 may be set above the comment region 503 in the right alignment manner, i.e., a bottom boundary of the gift display region 506 is higher than a top boundary of the comment region 503. The first display region 507 may be set between the top control region 504 and the gift display region 506. That is, a top boundary of the first display region 507 is lower than a bottom boundary of the top control region 504 and a bottom boundary of the first display region 507 is higher than a top boundary of the gift display region 506.

Four pieces of comment information may be displayed in the comment region 503, such as comment information "Xiao Hong: That sounds terrific!", comment information "Xiao Ming: Seek for reply!", comment information "Xiao Ming: Like!" and comment information "Xiao Ming is coming". In the case that the electronic device 501 receives a click of the user on the first information display box to which the comment information "Xiao Ming: Seek for reply!" belongs (as shown in Figure 4), a second information display box 508 may be displayed in the upper left corner of the first display region 507, and the comment information "Xiao Ming: Seek for reply!" may be displayed in the second information display box 508.

In an embodiment, the electronic device may further display a target identifier in the first target region. The target identifier may be displayed in front of user information of the target comment region information.

The target identifier may be any preset identifier with a prompting function for the user, which is not limited here.

Referring to Figure 5, the target identifier may be an identifier "@", which may be displayed in front of a user's nickname "Xiao Ming" in the comment information "Xiao Ming: Seek for reply! ".

In an embodiment, the electronic device may further display the target comment region information in the first target region based on a preset display format.

The preset display format may be any preset display format, which is not limited here.

Referring to Figure 5, in the first target region 507, the user's nickname "Xiao Ming" and a comment region message "Seek for reply!" in the comment information "Xiao Ming: Seek for reply!" may be displayed in different lines, and the user's nickname "Xiao Ming" is displayed above the comment region message "Seek for reply!".

In an embodiment, the electronic device may keep displaying the target comment region information in the comment region in response to receiving the information trigger operation on the target comment region information.

In an embodiment, the electronic device may display the target comment region information in the first target region and the comment region at the same time, in response to receiving the information trigger operation on the target comment region information.

Referring to Figure 5 again, in the case that the electronic device 501 receives a click of the user on the first information display box to which the comment information "Xiao Ming: Seek for reply!" belongs (as shown in Figure 4), the comment information "Xiao Ming: Seek for reply!" may continue to be displayed in the comment region 503.

In other embodiments of the present disclosure, in S230, after receiving the information trigger operation on the target comment region information, the electronic device may display an information trigger panel for the target comment region information in response to the information trigger operation. The information trigger panel may include a pin trigger control. The user may perform a pin trigger operation on the pin trigger control. The electronic device receives the pin trigger operation on the pin trigger control, and display the target comment region information in a first target region in response to the pin trigger operation.

In an embodiment, the pin trigger control may include a button or an icon configured to trigger pinning information at the top position of the virtual room.

In an embodiment, the pin trigger operation may include an operation, such as click, long-press or double-click, on the pin trigger control.

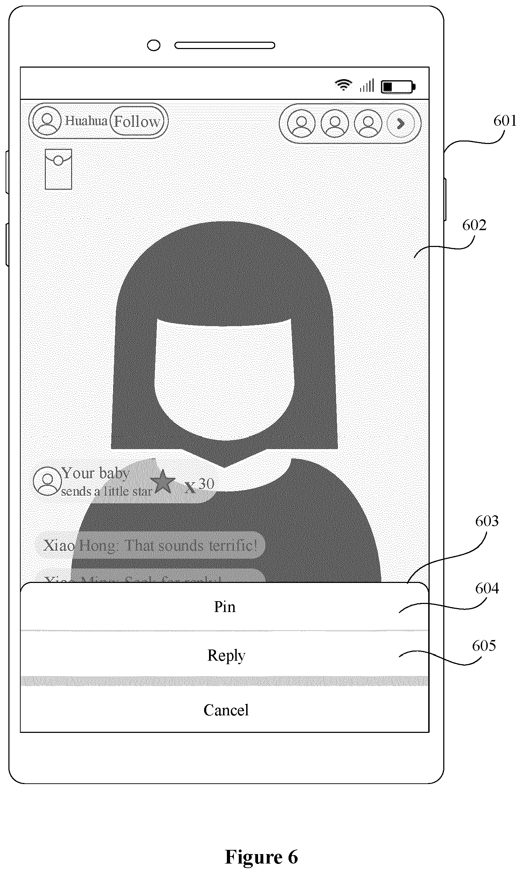

Figure 6 shows a schematic diagram of a live broadcast interface according to another embodiment of the present disclosure.

As shown in Figure 6, a live room interface 602 may be displayed on an electronic device 601. In the case that the electronic device 601 receives a click of the user on the first information display box to which the comment information "Xiao Ming: Seek for reply!" belongs (as shown in Figure 4), an information trigger panel 603 for the comment information "Xiao Ming: Seek for reply!" may be displayed in the live room interface 602. A pin trigger control 604 such as a "Pin" button may be displayed in the information trigger panel 603. The user may click the social platform wall trigger control 604, so that the electronic device 601 may display the comment information "Xiao Ming: Seek for reply!" in an upper left corner of the first display region (as shown in Figure 5).

In an embodiment, the information trigger panel may further include a reply trigger control. The reply trigger control may be configured to trigger a display of an information editing control. The user may input reply information to the target comment region information by the information editing control.

Referring to Figure 6 again, a reply trigger control 605 such as a "Reply" button may be displayed in the information trigger panel 603. The user may click the reply trigger control 605, so that the electronic device may display the information editing control for inputting reply information to the comment information "Xiao Ming: Seek for reply! ".

In the embodiments of the present disclosure, after receiving an information trigger operation on target comment region information displayed in a comment region of a target interface, the target comment region information may be displayed in a first target region of the target interface other than the comment region and a control region, to pin the target comment region information at the top position of the virtual room. Since the target comment region information in the first target region is not overwhelmed by a large amount of information, it can be ensured that all participants can clearly see the target comment region information, which is beneficial to an interaction among all participants, and thus improves an interactive atmosphere in the leisure and entertainment process.

In another embodiment of the present disclosure, in order to synchronize the effect of pin the target comment region information at the top position of the virtual room to other users in the virtual room, after S230 shown in Figure 2, the information display method may further include: acquiring target pin information corresponding to the target comment region information, where the target pin information includes at least one of the target comment region information and a target display position of the target comment region information; and sending an information storage request carrying the target pin information to a server, where the information storage request is used to instruct the server to store the target pin information in association with a target interface identifier of the target interface.

In an embodiment of the present disclosure, after displaying the target comment region information in the first target region of the target interface, the electronic device may acquire target pin information corresponding to the target comment region information, and send an information storage request carrying the target pin information to a server such as a pin server. The server may store the target pin information in association with a target interface identifier of the target interface in response to the information storage request. Therefore, other electronic devices may pull the target pin information stored in association with the target interface identifier from the server, thereby enabling other electronic devices to synchronize the effect of pinning the target comment region information at the top position of the virtual room.

In an embodiment of the present disclosure, the target pin information includes at least one of the target comment region information and a target display position of the target comment region information. In other embodiments, the target display position may include a preset display position.

In some embodiments, in the case that the target pin information includes the target comment region information, other electronic devices may pull the target pin information from the server and acquire the target comment region information in the target pin information, to display the target comment region information on the preset display position of the first target region.

In other embodiments, in the case that the target pin information includes the target comment region information and the target display position of the target comment region information, other electronic devices may acquire the target comment region information and the target display position in the target pin information after pulling the target pin information each time, and then display the target comment region information on the target display position of the first target region.

In an embodiment of the present disclosure, the information storage request may further carry a target interface identifier of the target interface. The server may acquire the target interface identifier of the target interface, and store the target pin information in association with the target interface identifier.

In some embodiments of the present disclosure, after the electronic device sends the target pin information to the server such as the pin server, the server may directly store the target pin information in association with the target interface identifier of the target interface.

In other embodiments of the present disclosure, after the electronic device sends the target pin information to the server such as the pin server, an information check node in the server may perform risk control check on the target comment region information in the target pin information. If the target comment region information passes the risk control check, the server may store the target pin information in association with the target interface identifier of the target interface. Otherwise, the server may reply to the electronic device with pin failure information. In response to the pin failure information, the electronic device stops displaying the target comment region information in the first target region, and displays first prompt information. The first prompt information may be used to prompt the user that the target comment region information fails to be pinned at the top position of the virtual room.

In another embodiment of the present disclosure, in order to improve the control flexibility of the target comment region information displayed in the first target region, after S230 shown in Figure 2, the information display method may further include: receiving a moving operation on the target comment region information; and displaying the target comment region information on a target moving position in response to the moving operation in a case that the target moving position is located in the first target region, where the target moving position includes a stop position of the moving operation.

In an embodiment of the present disclosure, the electronic device displays the target comment region information in the first target region of the target interface. If the user wants to control a display state of the target comment region information, a moving operation on the target comment region information may be input. After receiving the moving operation on the target comment region information, the electronic device may detect a stop position of the moving operation, i.e., a target moving position, in real time. If the target moving position is located in the first target region, the electronic device may directly display the target comment region information on the target moving position.

In some embodiments, the target comment region information may be displayed directly on the target interface.

In an embodiment, the moving operation may include a dragging operation on the target comment region information, or other operations or combinations of operations that may move the target comment region information, which is not limited here.

In other embodiments, the target comment region information may be displayed in a second information display box. The second information display box may be displayed on the target interface. For example, the second information display box may be displayed on the target interface in the superimposed manner, so that the target comment region information may be displayed on the target interface in the superimposed manner.

A display parameter such as a shape, a color or a transparency of the second information display box may be set as required, which is not limited here.

In an embodiment, the moving operation may further include a dragging operation on the second information display box to which the target comment region information belongs, or other operations or combinations of operations that may move the second information display box, which is not limited here.

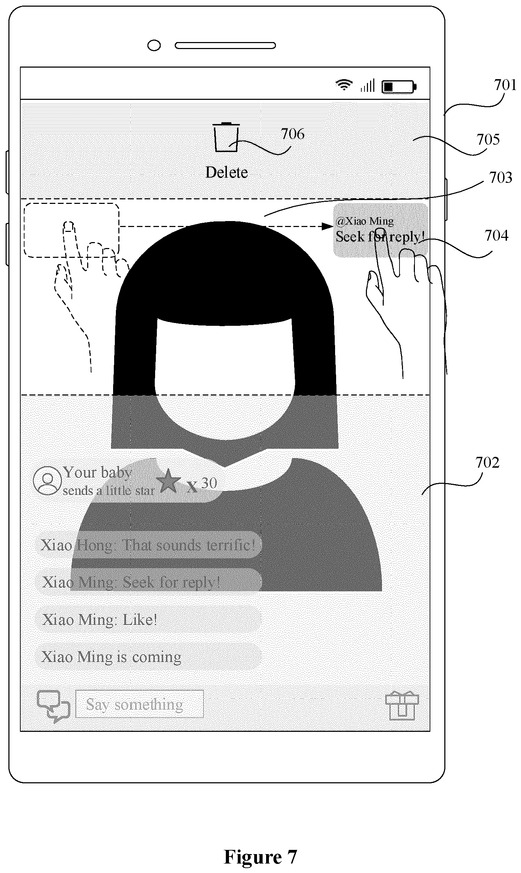

Figure 7 shows a schematic diagram of a moving operation according to an embodiment of the present disclosure.

As shown in Figure 7, a live room interface 702 may be displayed on an electronic device 701. The live room interface 702 includes a first target region 703. A second information display box 704 is displayed in an upper left corner of the first target region 703, and comment information "Xiao Ming: Seek for reply!" is displayed in the second information display box 704. In the case that the user wants to move the comment information "Xiao Ming: Seek for reply!" to an upper right corner of the first target region 703, the second information display box 704 may be dragged to the upper right corner of the first target region 703, so that the second information display box 704 is displayed in the upper right corner of the first target region 703. Thus, the comment information "Xiao Ming: Seek for reply!" is displayed in the upper right corner of the first target region 703.

Thus, in the embodiments of the present disclosure, a display position of the target comment region information may be controlled by moving the target comment region information in the first target region, thereby improving the control flexibility of the target comment region information displayed in the first target region.

Further, in order to synchronize the effect of pinning the target comment region information at the top position of the virtual room with other users in the virtual room, after displaying the target comment region information on the target moving position, the information display method may further include: acquiring target pin information corresponding to the target comment region information, where the target pin information includes at least one of the target comment region information and a target display position of the target comment region information; and sending an information storage request carrying the target pin information to a server, where the information storage request is used to instruct the server to store the target pin information in association with a target interface identifier of the target interface.

In an embodiment of the present disclosure, after displaying the target comment region information at the target moving position in the first target region, the electronic device may acquire target pin information corresponding to the target comment region information, and send an information storage request carrying the target pin information to a server such as a pin server. The server may store the target pin information in association with a target interface identifier of the target interface in response to the information storage request. Therefore, other electronic devices may pull the target pin information stored in association with the target interface identifier from the server. Thus, other electronic devices can synchronize the effect of pin the target comment region information at the top position of the virtual room.

In an embodiment of the present disclosure, the target pin information includes at least one of the target comment region information and a target display position of the target comment region information. In other embodiments, the target display position may include a target moving position.

In some embodiments, in the case that comment region information may be displayed in the first target region, the target pin information may include the target display position of the target comment region information.

In an embodiment, after receiving the target pin information, the server may acquire the target display position in the target pin information. If a display position of the target comment region information has been stored in the server, the stored display position is replaced by the target display position. Otherwise, the target display position is directly stored in association with the target comment region information.

In other embodiments, the target pin information may further include the target comment region information and the target display position of the target comment region information.

In an embodiment, after receiving the target pin information, the server may acquire the target comment region information and the target display position in the target pin information. If the display position of the target comment region information has been stored in the server, the stored display position is replaced by the target display position. Otherwise, the target display position is directly stored in association with the target comment region information.

In an embodiment of the present disclosure, the information storage request may further carry a target interface identifier of the target interface, so that the server may acquire the target interface identifier of the target interface, and store the target pin information in association with the target interface identifier.

In other embodiments of the present disclosure, in order to further improve the control flexibility of the target comment region information displayed in the first target region, after receiving the moving operation on the target comment region information, the information display method may further include: stopping displaying the target comment region information in the first target region in response to the moving operation in a case that the target moving position is located in a second target region, where the second target region is configured to trigger a deletion of the target comment region information in the first target region.

The second target region may partially overlap with at least one of the control region, the comment region and the gift display region, or may not overlap with any of the above regions.

In an embodiment of the present disclosure, after receiving a moving operation on the target comment region information, the electronic device may display a delete trigger control in a second target region. The electronic device may detect a stop position of the moving operation, i.e., the target moving position, in real time. If the target moving position is located in the second target region, the delete trigger control may be triggered, to trigger the cancellation of pinning the target comment region information at the top position of the virtual room and further to stop displaying the target comment region information in the first target region.

In an embodiment, the delete trigger control may include a button or an icon configured to trigger the cancellation of pinning the comment at the top position of the virtual room.

Referring to Figure 7 again, in a process of dragging the second information display box 704 by the user, the live room interface 702 may further include a second target region 705. A delete trigger control 706 such as a "Delete" icon may be displayed in the second target region 705. If the user drags the second information display box 704 to the second target region 705 and triggers the delete trigger control 706, the electronic device stops displaying the second information display box 704 in the first target region 703, and thus stops displaying the comment information "Xiao Ming: Seek for reply!" in the first target region 703.

Thus, in the embodiments of the present disclosure, the cancellation of pinning the target comment region information at the top position of the virtual room may be triggered by moving the target comment region information displayed in the first target region to a second target region, thereby further improving the control flexibility of the target comment region information displayed in the first target region.

Further, in order to synchronize the effect of pinning the target comment region information at the top position of the virtual room with other users in the virtual room, after stopping displaying the target comment region information in the first target region, the information display method may further include: sending a first deletion request carrying the target comment region information to a server, where the first deletion request is used to instruct the server to delete the target pin information corresponding to the target comment region information.

In an embodiment of the present disclosure, after stopping the display of the target comment region information in the first target region, the electronic device may send a first deletion request carrying the target comment region information to a server such as the pin server. The server may delete the target pin information containing the target comment region information in response to the first deletion request, so that other electronic devices may no longer pull this target pin information from the server. Thus, other electronic devices can simultaneously cancel the effect of pinning the target comment region information at the top position of the virtual room.

In another embodiment of the present disclosure, in order to prevent the comment region information displayed in the first target region from blocking display content of the target interface, the preset number of piece of comment region information may be displayed in the first target region at most.

In some embodiments of the present disclosure, S230 may further include: replacing target historical comment region information having longest display duration with the target comment region information for display, in a case that the number of piece of historical comment region information displayed in the first target region reaches a preset number.

In an embodiment, the electronic device may be preset with a maximum number of piece of comment region information that may be displayed in the first target region, i.e., a preset number.

The preset number may be set in advance as required, which is not limited here. For example, the preset number may be 1, 2, 5 or 6.

In an embodiment of the present disclosure, after receiving an information trigger operation on the target comment region information in the comment region information, the electronic device may first determine whether the number of piece of historical comment region information displayed in the first target region reaches the preset number. If the number reaches the preset number, the target historical comment region information having the longest display duration may be determined in the historical comment region information displayed in the first target region, and then the target historical comment region information is replaced with the target comment region information for display.

Thus, in the embodiments of the present disclosure, the display of too much pieces of comment region information in the first target region may be avoided by controlling the number of piece of comment region information displayed in the first target region, thereby preventing the comment region information displayed in the first target region from blocking the display content of the target interface and improving the user's experience of watching the display content of the target interface, such as live broadcast content.

Further, in order to synchronize the effect of pinning the target comment region information at the top position of the virtual room with other users in the virtual room, after the target historical comment region information having the longest display duration is replaced by the target comment region information for display, the information display method may further include: sending a second deletion request carrying the target historical comment region information to a server, where the second deletion request is used to instruct the server to delete pin information corresponding to the target historical comment region information; acquiring the target pin information corresponding to the target comment region information, where the target pin information includes at least one of the target comment region information and the target display position of the target comment region information; and sending the information storage request carrying the target pin information to a server, where the information storage request is used to instruct the server to store the target pin information in association with a target interface identifier of the target interface.

The method for the server deleting the pin information corresponding to the target historical comment region information in response to the second deletion request is similar to the method for the server deleting the target pin information corresponding to the target comment region information in response to the first deletion request, which is not repeated here. The method for the server storing the target pin information in association with the target interface identifier of the target interface in response to the information storage request has been explained above, which is not repeated here.

In other embodiments of the present disclosure, S230 may further include: adding the target comment region information to the first target region for display, in a case that the number of piece of historical comment region information displayed in the first target region does not reach the preset number.

In an embodiment of the present disclosure, after receiving an information trigger operation on the target comment region information in the comment region information, the electronic device may first determine whether the number of pieces of historical comment region information displayed in the first target region reaches the preset number. If the number does not reach the preset number, the target comment region information may be directly added to the first target region for display. Then, the electronic device may acquire target pin information corresponding to the target comment region information, to send an information storage request carrying the target pin information to a server.

The target comment region information may be added to the first target region for display by: in the case that historical comment region information has been displayed in the first display region, directly displaying the target comment region information on a preset display position if the historical comment region information is not displayed on the preset display position; moving the historical comment region information to a display position adjacent to the preset display position along a specified direction if the historical comment region information is displayed on the preset display position; moving the historical comment region information displayed on the display position adjacent to the preset display position to a display position adjacent to the display position along the specified direction if the historical comment region information is displayed on the display position adjacent to the preset display position; and so on.

The specified direction may be any preset direction, which is not limited here. For example, the specified direction may be left, right, up or down.

In another embodiment of the present disclosure, in order to further improve the control flexibility of the target comment region information displayed in the first target region, after S230 shown in Figure 2, the information display method may further include: receiving an interactive trigger operation on the target comment region information; and displaying a target interactive panel for the target comment region information in response to the interactive trigger operation, where the target interactive panel includes an interactive panel corresponding to the interactive trigger operation.

In an embodiment of the present disclosure, after receiving an interactive trigger operation on the target comment region information, the electronic device may display a target interactive panel for the target comment region information in response to the interactive trigger operation. The user may complete an interactive operation in the target interactive panel.

In an embodiment, the interactive trigger operation may include at least one of a reply operation, a like operation, a forwarding operation and a favorite operation.

For example, in the case that the interactive trigger operation includes a reply operation, the electronic device may display an information reply panel for the target comment region information. The information reply panel may include an information editing control on which the user may input reply information to the target comment region information. The user may input and send the reply information through the information editing control.

In some embodiments of the present disclosure, the interactive trigger operation may include an operation, such as clicking, long-pressing, double-clicking or multi-finger clicking, on the target comment region information or the second information display box to which the target comment region information belongs, which is not limited here.

In an embodiment, different interactive trigger operations may correspond to different operation types.

For example, if the electronic device receives a click operation on the target comment region information displayed in the first target region, the electronic device may determines that a reply operation on the target comment region information is received. If the electronic device receives a long-press operation on the target comment region information displayed in the first target region, the electronic device may determines that a like operation on the target comment region information is received. If the electronic device receives a double-click operation on the target comment region information displayed in the first target region, the electronic device may determines that a forwarding operation on the target comment region information is received. If the electronic device receives a two-finger click operation on the target comment region information displayed in the first target region, the electronic device may determines that a favorite operation on the target comment region information is received.

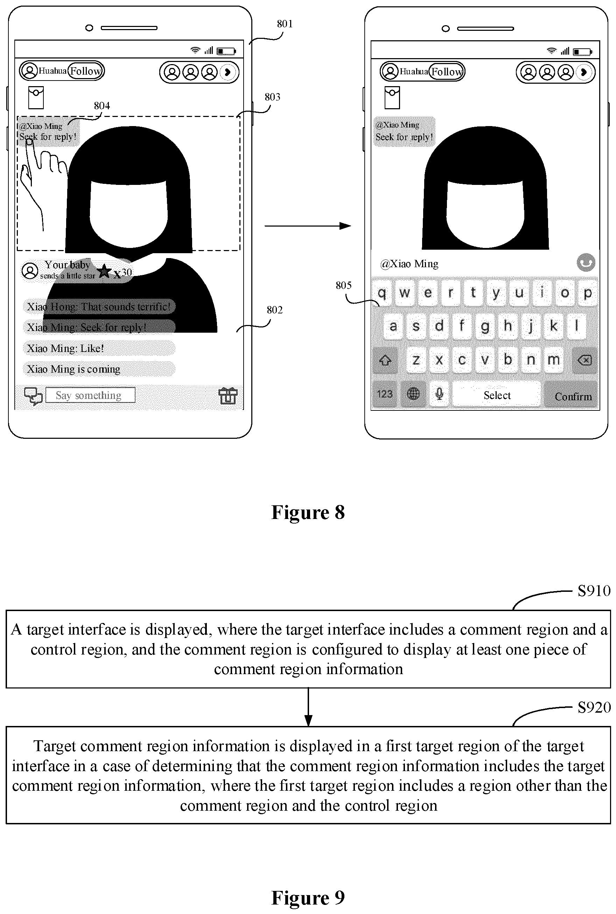

Figure 8 shows a schematic diagram of an interactive operation process according to an embodiment of the present disclosure.

As shown in Figure 8, a live room interface 802 may be displayed on an electronic device 801. The live room interface 802 includes a first target region 803. A second information display box 804 is displayed in an upper left corner of the first target region 803, and comment information "Xiao Ming: Seek for reply!" is displayed in the second information display box 804. When the user wants to reply to the comment information "Xiao Ming: Seek for reply!", a chick operation may be performed on the second information display box 804. Thus, the electronic device 801 may display an information reply panel 805 including an information editing control in the live room interface 802. The user may input reply information to the target comment region information on the information editing control.

In an embodiment, reply object information may be displayed in an input box of the information editing control. The reply object information may include an identifier with a prompt function for the user such as an identifier "@" and user information of a replied user such as a user's nickname "Xiao Ming". The user may input a reply message behind the reply object information. The reply object information and the reply message constitute the reply information to the target comment region information.

In an embodiment, after the user sends the reply information to the target comment region information, the electronic device may display the reply information in the comment region or in the first target region, which is not limited here.

In other embodiments of the present disclosure, before receiving an interactive trigger operation on the target comment region information, the user may input a panel trigger operation on the target comment region information displayed in the first target region, to trigger the electronic device to display an operation panel for the target comment region information. The electronic device may display the operation panel including multiple interactive controls for the target comment region information, after receiving the panel trigger operation on the target comment region information displayed in the first target region.

One interactive control corresponds to one interactive function. In an embodiment, the interactive function may include at least one of a reply function, a like function, a forwarding function, a favorite function and the like.

In an embodiment, the interactive control may be a button or an icon configured to trigger an interactive function, which is not limited here.

In an embodiment, the panel trigger operation may include a clicking, long-pressing, double-clicking or multi-finger clicking operation on the target comment region information or the second information display box to which the target comment region information belongs, which is not limited here.

In these embodiments, the interactive trigger operation may be a trigger operation on an interactive control, such as a clicking, long-pressing or double-clicking operation on the interactive control.

Thus, in the embodiments of the present disclosure, the user may perform various interactive operations on the target comment region information displayed in the first target region, further improving the user experience.

Thus, in the embodiments of the present disclosure, an administrator user and a non-administrator user in a virtual room may interact for target comment region information pinned at the top position of the virtual room, thereby providing more expression means for the administrator user and the non-administrator user, enhancing an interactive atmosphere and user's sense of participation in the virtual room, avoiding any separation between the administrator user and the non-administrator user, and bringing effective information complementation in an interaction between the administrator user and the non-administrator user, thus realizing an insightful and valuable interaction between the administrator user and the non-administrator user.

Based on the above architecture, an information display method according to another embodiment of the present disclosure is described below in conjunction with Figure 9.

In an embodiment of the present disclosure, the information display method may be executed by an electronic device, such as the first electronic device 101 or the second electronic device 102 in the client shown in Figure 1. The electronic device may include a device with communication function such as a mobile phone, a tablet computer, a desktop computer, a notebook computer, an in-vehicle terminal, a wearable device, an all-in-one computer, and a smart home device, or and may also include a device simulated with a virtual machine or an emulator.

Figure 9 shows a schematic flowchart of an information display method according to another embodiment of the present disclosure.

As shown in Figure 9, the information display method may include the following steps S910 to S920.

In S910, a target interface is displayed, where the target interface includes a comment region and a control region, and the comment region is configured to display at least one piece of comment region information.

In an embodiment of the present disclosure, in a process of the user entering a virtual room and staying in the virtual room, the electronic device may display the target interface.

In some embodiments, a user entering a virtual room may refer to the user entering the virtual room for a first time.

In other embodiments, a user entering a virtual room may refer to the user re-entering the virtual room after exiting the virtual room for some reason.

It should be noted that the target interface, the comment region, the control region and the comment region information have been described in the embodiments shown in Figure 2, which is not repeated here.

In S920, target comment region information is displayed in a first target region of the target interface in a case of determining that the comment region information includes the target comment region information, where the first target region includes a region of the target interface other than the comment region and the control region.

In an embodiment of the present disclosure, in a process of displaying the target interface, the electronic device may poll to determine whether the comment region information includes target comment region information. The target comment region information may be set by an administrator user of the virtual room and displayed in the first target region. Once it is determined that the comment region information includes the target comment region information, the target comment region information may be displayed in the first target region of the target interface, to pin the target comment region information at the top position of the virtual room.

It should be noted that the first target region and the target comment region information have been described in the embodiments shown in Figure 2, which is not repeated here.

In the embodiments of the present disclosure, the target comment region information may be displayed in the first target region of the target interface other than the comment region and the control region, thus pinning the target comment region information at the top position of the virtual room. Since the target comment region information in the first target region is not overwhelmed by a large amount of information, it can be ensured that all participants can clearly see the target comment region information, which is beneficial to an interaction among all participants, and thus improves an interactive atmosphere in a process of enjoying leisure and entertainment.

In other embodiments of the present disclosure, the target comment region information is not displayed in the first target region, in the case of determining that the comment region information does not include the target comment region information.

In some embodiments, in a process of displaying the target interface, the electronic device may poll to determine whether the comment region information includes target comment region information. If it is determined that the comment region information does not include the target comment region information and no target comment region information is displayed in the first target region, it is determined that the target comment region information is not required to be pinned at the top position of the virtual room. Therefore, the target comment region information may be kept from not being displayed in the first target region.

In other embodiments, in a process of displaying the target interface, the electronic device may poll to determine whether the comment region information includes target comment region information. If it is determined that the comment region information does not include the target comment region information but target comment region information has been displayed in the first target region, an administrator user of the virtual room has cancelled pinning the target comment region information at the top position of the virtual room. Therefore, the target comment region information may not be displayed in the first target region any more.

In another embodiment of the present disclosure, the determining that the comment region information includes the target comment region information in S920 may further include: pulling target pin information stored in association with a target interface identifier of the target interface from a server, where the target pin information includes at least one of the target comment region information and a target display position of the target comment region information; and determining that the comment region information includes the target comment region information in the case that the target pin information has been pulled.

In an embodiment of the present disclosure, in a process of displaying the target interface, the electronic device may poll and pull the target pin information corresponding to the virtual room from a server such as a pin server, and determine that the comment region information includes the target comment region information in the case that the target pin information has been pulled.

S920 may further include: displaying the target comment region information based on the target pin information.

In some embodiments, in the case that the target pin information includes the target comment region information, the electronic device may acquire the target comment region information in the target pin information every time the target pin information has been pulled, and then display the target comment region information on a preset display position in the first target region.

In other embodiments, in the case that the target pin information includes the target comment region information and the target display position of the target comment region information, the electronic device may acquire the target comment region information and the target display position in the target pin information every time the target pin information has been pulled, and then display the target comment region information on the target display position in the first target region.

In an embodiment, in the case that the target display position in the target pin information pulled by the electronic device this time is different from a historical display position of the target comment region information in the first target region before the target pin information is pulled this time, the electronic device may move the target comment region information from the historical display position to the target display position at a uniform speed for display.

In another embodiment, in the case that the target display position in the target pin information pulled by the electronic device this time is different from a historical display position of the target comment region information in the first target region before the target pin information is pulled this time, the electronic device may directly display the target comment region information on the target display position.

Thus, in the embodiments of the present disclosure, whether the comment region information includes the target comment region information may be determined by pulling target pin information from a server, and further, the accuracy of detecting whether the comment region information includes the target comment region information is improved by storing the target pin information separately from other comment region information.

In another embodiment of the present disclosure, in order to further improve the control flexibility of the target comment region information displayed in the first target region, after S920, the information display method may further include: receiving an interactive trigger operation on the target comment region information; and displaying a target interactive panel for the target comment region information in response to the interactive trigger operation, where the target interactive panel includes an interactive panel corresponding to the interactive trigger operation.

The interactive trigger operation includes at least one of a reply operation, a like operation, a forwarding operation and a favorite operation.

It should be noted that the interactive method for the target comment region information displayed in the first target region has been described above, which is not repeated here.

Thus, in the embodiments of the present disclosure, target comment region information may be pinned at the top position of the virtual room synchronously for both an administrator user and a non-administrator user of the virtual room, and the administrator user and the non-administrator user may interact for the target comment region information pinned at the top position of the virtual room, thereby providing more expression means for the administrator user and the non-administrator user, and enhancing an interactive atmosphere and user's sense of participation in the virtual room.

In order to implement the information display method shown in Figures 2 to 8, an information display apparatus is further provided according to an embodiment of the present disclosure.

In some embodiments of the present disclosure, the information display apparatus may be an electronic device, such as the first electronic device 101 in the client shown in Figure 1. The electronic device may include a device with communication function such as a mobile phone, a tablet computer, a desktop computer, a notebook computer, an in-vehicle terminal, a wearable electronic device, an all-in-one computer, and a smart home device, or may be a device simulated with a virtual machine or an emulator.

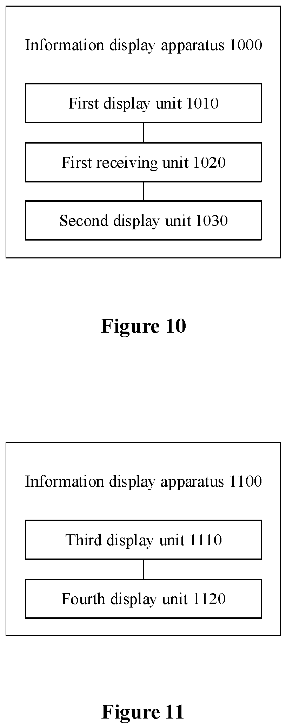

Figure 10 shows a schematic structural diagram of an information display apparatus according to an embodiment of the present disclosure.

As shown in Figure 10, the information display apparatus 1000 may include a first display unit 1010, a first receiving unit 1020 and a second display unit 1030.

The first display unit 1010 may be configured to display a target interface, where the target interface includes a comment region and a control region, and the comment region is configured to display at least one piece of comment region information.

The first receiving unit 1020 may be configured to receive an information trigger operation on target comment region information in the comment region information.

The second display unit 1030 may be configured to display the target comment region information in a first target region of the target interface in response to the information trigger operation, where the first target region includes a region other than the comment region and the control region.

In the embodiments of the present disclosure, after receiving the information trigger operation on the target comment region information displayed in the comment region of the target interface, the target comment region information may be displayed in a first target region of the target interface other than the comment region and a control region, thus pinning the target comment region information at the top position of the virtual room. Since the target comment region information in the first target region is not overwhelmed by a large amount of information, it can be ensured that all participants can clearly see the target comment region information, which is beneficial to an interaction among all participants, and thus improves an interactive atmosphere in a process of enjoying leisure and entertainment.

In some embodiments of the present disclosure, the information display apparatus 1000 may further include a second receiving unit and a fifth display unit.

The second receiving unit may be configured to receive a moving operation on the target comment region information.

The fifth display unit may be configured to display the target comment region information at a target moving position in response to the moving operation in a case that the target moving position is located in the first target region, where the target moving position includes a stop position of the moving operation.

In some embodiments of the present disclosure, the information display apparatus 1000 may further include an information acquisition unit and a first sending unit.

The information acquisition unit may be configured to acquire target pin information corresponding to the target comment region information, where the target pin information includes at least one of the target comment region information and a target display position of the target comment region information.

The first sending unit may be configured to send an information storage request carrying the target pin information to a server, where the information storage request is used to instruct the server to store the target pin information in association with a target interface identifier of the target interface.

In some embodiments of the present disclosure, the information display apparatus 1000 may further include a sixth display unit. The sixth display unit may be configured to stop displaying the target comment region information in the first target region in response to the moving operation in a case that the target moving position is located in a second target region, where the second target region is configured to trigger a deletion of the target comment region information in the first target region.

In some embodiments of the present disclosure, the information display apparatus 1000 may further include a second sending unit. The second sending unit may be configured to send a first deletion request carrying the target comment region information to a server, wherein the first deletion request is used to instruct the server to delete the target pin information corresponding to the target comment region information.

In some embodiments of the present disclosure, the second display unit 1030 may be further configured to replace target historical comment region information having longest display duration with the target comment region information for display, in a case that the number of pieces of historical comment region information displayed in the first target region reaches a preset number.

It should be noted that the information display apparatus 1000 shown in Figure 10 may perform various steps in the method embodiments shown in Figures 2 to 8, and implement various processes and effects in the method embodiments shown in Figures 2 to 8, which will not be repeated herein.

In order to implement the information display method shown in Figure 9, an information display apparatus is further provided according to another embodiment of the present disclosure.

In some embodiments of the present disclosure, the information display apparatus may be an electronic device, such as the first electronic device 101 or the second electronic device 102 in the client shown in Figure 1. The electronic device may include a device with communication function such as a mobile phone, a tablet computer, a desktop computer, a notebook computer, an in-vehicle terminal, a wearable electronic device, an all-in-one computer, and a smart home device, or may be a device simulated with a virtual machine or an emulator.

Figure 11 shows a schematic structural diagram of an information display apparatus according to another embodiment of the present disclosure.

As shown in Figure 11, the information display apparatus 1100 may include a third display unit 1110 and a fourth display unit 1120.

The third display unit 1110 may be configured to display a target interface, where the target interface includes a comment region and a control region, and the comment region is configured to display at least one piece of comment region information.

The fourth display unit 1120 may be configured to display target comment region information in a first target region of the target interface in a case of determining that the comment region information includes the target comment region information, where the first target region includes a region other than the comment region and the control region.

In the embodiments of the present disclosure, the target comment region information may be displayed in the first target region of the target interface other than the comment region and the control region, thus pinning the target comment region information at the top position of the virtual room. Since the target comment region information in the first target region is not overwhelmed by a large amount of information, it can be ensured that all participants can clearly see the target comment region information, which is beneficial to an interaction among all participants, and thus improves an interactive atmosphere in a process of enjoying leisure and entertainment.

In some embodiments of the present disclosure, the information display apparatus 1100 may further include an information pulling unit and an information processing unit.

The information pulling unit may be configured to pull target pin information stored in association with a target interface identifier of the target interface from a server, where the target pin information includes at least one of the target comment region information and a target display position of the target comment region information.

The information processing unit may be configured to determine that the comment region information includes the target comment region information in a case that the target social platform wall information has been pulled.

The fourth display unit 1120 may be further configured to display the target comment region information based on the target pin information.

In some embodiments of the present disclosure, the information display apparatus 1100 may further include a third receiving unit and a seventh display unit.

The third receiving unit may be configured to receive an interactive trigger operation on the target comment region information.

The seventh display unit may be configured to display a target interactive panel for the target comment region information in response to the interactive trigger operation, where the target interactive panel includes an interactive panel corresponding to the interactive trigger operation.

The interactive trigger operation may include at least one of a reply operation, a like operation, a forwarding operation and a favorite operation.

It should be noted that the information display apparatus 1100 shown in Figure 11 may perform various steps in the method embodiment shown in Figure 9, and implement various processes and effects in the method embodiment shown in Figure 9, which will not be repeated herein.

An information display device is further provided according to an embodiment of the present disclosure, which may include a processor and a memory. The memory may be configured to store executable instructions. The processor may be configured to read the executable instructions from the memory and execute the executable instructions to implement the information display method in the above embodiments.

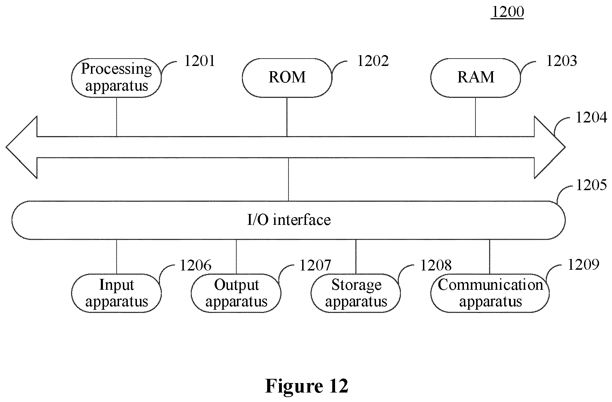

Figure 12 shows a schematic structural diagram of an information display device according to an embodiment of the present disclosure. Hereinafter, reference is made to Figure 12, which shows a structural schematic diagram of an information display device 1200 suitable for implementing the embodiments of the present disclosure.

The information display device 1200 in the embodiment of the present disclosure may be an electronic device. The electronic device may include, but is not limited to, mobile terminals, such as, mobile phones, laptops, digital broadcast receivers, PDAs (personal digital assistants), PADs (tablets), PMPs (portable multimedia players), vehicle-mounted terminals (such as in-vehicle navigation terminals), wearable devices; and fixed terminals such as digital TVs, desktop computers and smart home devices.

In some embodiments of the present disclosure, the information display device 1200 may be the first electronic device 101 or the second electronic device 102 in the client shown in Figure 1, which is not limited here.

It should be noted that the information display device 1200 shown in Figure 12 is only exemplary, and should not indicate any limitation to the function and scope of application of the embodiments of the present disclosure.

As shown in Figure 12, the information display device 1200 may include a processing apparatus (e.g., a central processing unit or a graphics processor) 1201, which may execute various operations and processing based on a program stored in a read only memory (ROM) 1202 or a program loaded from a storage apparatus 1208 into a random access memory (RAM) 1203. The RAM 1203 is further configured to store various programs and data required by the information display device 1200 to perform an operation. The processing apparatus 1201, the ROM 1202 and the RAM 1203 are connected to each other through a bus 1204. An input/output (I/O) interface 1205 is also connected to the bus 1204.

Generally, the I/O interface 1205 may be connected to: an input apparatus 1206, such as a touch screen, a touch panel, a keyboard, a mouse, a camera, a microphone, an accelerometer, and a gyroscope; an output apparatus 1207, such as a liquid crystal display (LCD), a speaker, and a vibrator; a storage apparatus 1208 such as a magnetic tape and a hard disk; and a communication apparatus 1209. The communication apparatus 1209 enables wireless or wired communication between the information display device 1200 and other devices for data exchanging. Figure 12 shows an information display device 1200 having various components. It should be understood that the illustrated components in Figure 12 are not necessarily required to all be implemented or included. Alternatively, more or fewer components may be implemented or included.

A computer readable storage medium storing a computer program is further provided according to an embodiment of the present disclosure. The computer program, when executed by a computing device, causes the computing device to implement the information display method in the above embodiments.

The computing device may be the information display device in the above embodiment.

Particularly, according to the embodiments of the present disclosure, the processes described above with reference to the flowcharts may be implemented as a computer software program.

A computer program product is further provided according to an embodiment of the present disclosure, which may include a computer program. The computer program, when executed by a processor, causes the processor to implement the information display method in the above embodiments.

For example, a computer program product is further provided as an embodiment in the present disclosure, including a computer program carried on a non-transitory computer readable medium. The computer program includes program code for performing the method shown in the flowchart. In the embodiment, referring to Figure 12, the computer program may be downloaded and installed from the network via the communication apparatus 1209, or installed from the storage apparatus 1208, or installed from the ROM 1202. When the computer program is executed by the processing apparatus 1201, the functions defined in the information display method according to the embodiment of the present disclosure are performed.

It is to be noted that, the computer readable medium mentioned herein may be a computer readable signal medium or a computer readable storage medium or any combination thereof. The computer readable storage medium may be, but is not limited to, a system, an apparatus, or a device in an electronic, magnetic, optical, electromagnetic, infrared, or semi-conductive form, or any combination thereof. The computer readable storage medium may be, but is not limited to, an electrical connection with one or more wires, a portable computer disk, a hard disk, a random access memory (RAM), a read only memory (ROM), an erasable programmable read only memory (EPROM or flash memory), an optical fiber, a portable compact disc read only memory (CD-ROM), a light storage device, a magnetic storage device or any proper combination thereof. In the present disclosure, the computer readable storage medium may be any tangible medium containing or storing a program, and the program may be used by or in combination with an instruction execution system, apparatus, or device. In the present disclosure, the computer readable signal medium may be a data signal transmitted in a baseband or transmitted as a part of a carrier wave and carrying computer readable program codes. The transmitted data signal may be in various forms, including but not limited to an electromagnetic signal, an optical signal or any proper combination thereof. The computer readable signal medium may be any computer readable medium other than the computer readable storage medium, and may send, propagate or transmit programs to be used by or in combination with an instruction execution system, apparatus or device. The program codes included in the computer readable medium may be transmitted via any proper medium including but not limited to: a wire, an optical cable, radio frequency (RF) and the like, or any proper combination thereof.

In some embodiments, the client and the server may communicate using any currently known or future developed network protocol such as HTTP, and may be interconnected with any form or medium of digital data communication (e.g., a communication network). Examples of the communication network include a local area network ("LAN"), a wide area network ("WAN"), the internet (e.g., the Internet), and an end-to-end network (e.g., ad hoc end-to-end network) or any of a currently known or a future developed network.

The computer readable medium may be incorporated in the computing device, or may exist alone without being assembled into the computing device.

The computer readable medium carries one or more programs. The one or more programs, when executed by the computing device, cause the computing device to:
display a target interface, where the target interface includes a comment region and a control region, and the comment region is configured to display at least one piece of comment region information; receive an information trigger operation on target comment region information in the comment region information; and display the target comment region information in a first target region of the target interface in response to the information trigger operation, where the first target region includes a region other than the comment region and the control region; or
display a target interface, where the target interface includes a comment region and a control region, and the comment region is configured to display at least one piece of comment region information; and display target comment region information in a first target region of the target interface in a case of determining that the comment region information includes the target comment region information, where the first target region includes a region other than the comment region and the control region.

In the embodiments of the present disclosure, the computer program code for performing the operations disclosed in the present disclosure may be written in one or more programming languages or combinations thereof. The programming languages include but are not limited to an object-oriented programming language, such as Java, Smalltalk, and C++, and a conventional procedural programming language, such as C language or a similar programming language. The program code may be executed entirely on a user computer, partially on the user computer, as an standalone software package, partially on the user computer and partially on a remote computer, or entirely on the remote computer or a server. In a case involving a remote computer, the remote computer may be connected to a user computer or an external computer through any kind of network including local area network (LAN) or wide area network (WAN). For example, the remote computer may be connected through Internet connection by an Internet service provider.

Flowcharts and block diagrams in the drawings illustrate the architecture, functions and operations that may be implemented by the system, method and computer program product according to the embodiments of the present disclosure. In this regard, each block in the flowcharts or the block diagrams may represent a module, a program segment, or a part of code. The module, the program segment, or the part of code contains one or more executable instructions for implementing the specified logical function. It should be also noted that, in some alternative implementations, the functions shown in the blocks may be performed in an order different from the order shown in the drawings. For example, two blocks shown in succession may actually be executed in parallel, or sometimes may be executed in a reverse order, which depends on the functions involved. It should also be noted that, each block in the block diagrams and/or the flowcharts and a combination of blocks in the block diagrams and/or the flowcharts may be implemented by a dedicated hardware-based system performing specified functions or operations, or may be implemented by a combination of dedicated hardware and computer instructions.

The units mentioned in the description of the embodiments of the present disclosure may be implemented by means of software, or otherwise by means of hardware. The name of the unit does not constitute a limitation on the unit itself under certain circumstances.

The functions described herein above may be performed at least in part by one or more hardware logic components. For example, without limitation, exemplary types of hardware logic components that can be used include: Field Programmable Gate Array (FPGA), Application Specific Integrated Circuit (ASIC), Application Specific Standard Product (ASSP), System on Chip (SOC), Complex Programmable Logical device (CPLD) and the like.

In the present disclosure, a machine readable medium may be a tangible medium, which may contain or store a program used by the instruction execution system, apparatus, or device or a program used in combination with the instruction execution system, apparatus, or device. The machine readable medium may be a machine readable signal medium or a machine readable storage medium. The machine readable medium may include, but is not limited to, a system, an apparatus or a device in an electronic, magnetic, optical, electromagnetic, infrared, or semi-conductive form, or any suitable combination thereof. The machine readable storage medium, for example, includes an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination thereof.

The above descriptions are only preferred embodiments of the present disclosure and explanations of the technical principles used in the present disclosure. Those skilled in the art should understand that the scope of the present disclosure is not limited to the technical solution formed by combination of the technical features described above, but also covers other technical solutions formed by any combination of the above technical features or the equivalent features of the technical features without departing from the concept of the present disclosure. For example, the scope of the present disclosure may cover a technical solution formed by replacing the features described above with technical features with similar functions disclosed in (but not limited to) the present disclosure.

In addition, although the above operations are described in a specific order, it should not be understood that these operations are required to be performed in the specific order or performed in a sequential order. In some conditions, multitasking and parallel processing may be advantageous. Similarly, although multiple implementation details are included in the above descriptions, the details should not be interpreted as limitations to the scope of the present disclosure. Some features described in an embodiment may be implemented in combination in another embodiment. In addition, the features described in an embodiment may be implemented individually or in any suitable sub-combination form in multiple embodiments.

Although the subject of the present disclosure has been described according to the structural features and/or logical actions of the method, it should be understood that the subject defined in the claims is not necessarily limited to the features or actions described above. The specific features and actions described above are only examples of the implementation of the claims.

## Claims

1. An information display method, comprising:
displaying a target interface, wherein the target interface comprises a comment region and a control region, and the comment region is configured to display at least one piece of comment region information;
receiving an information trigger operation on target comment region information in the comment region information; and
displaying the target comment region information in a first target region of the target interface in response to the information trigger operation, wherein the first target region comprises a region of the target interface other than the comment region and the control region.

2. The method according to claim 1, wherein after displaying the target comment region information in the first target region of the target interface, the method further comprises:
receiving a moving operation on the target comment region information; and
displaying the target comment region information at a target moving position in response to the moving operation in a case that the target moving position is located in the first target region, wherein the target moving position comprises a stop position of the moving operation.

3. The method according to claim 1 or 2, further comprising:
acquiring target pin information corresponding to the target comment region information, wherein the target pin information comprises at least one of the target comment region information and a target display position of the target comment region information; and
sending an information storage request carrying the target pin information to a server, wherein the information storage request is used to instruct the server to store the target pin information in association with a target interface identifier of the target interface.

4. The method according to claim 1, further comprising:
receiving a moving operation on the target comment region information; and
stopping displaying the target comment region information in the first target region in response to the moving operation in a case that a target moving position is located in a second target region, wherein the second target region is configured to trigger a deletion of the target comment region information in the first target region.

5. The method according to claim 4, wherein after stopping displaying the target comment region information in the first target region, the method further comprises:
sending a first deletion request carrying the target comment region information to a server, wherein the first deletion request is used to instruct the server to delete target pin information corresponding to the target comment region information.

6. The method according to claim 1, wherein the displaying the target comment region information in the first target region of the target interface comprises:
replacing target historical comment region information having longest display duration with the target comment region information for display, in a case that the number of pieces of historical comment region information displayed in the first target region reaches a preset number.

7. An information display method, comprising:
displaying a target interface, wherein the target interface comprises a comment region and a control region, and the comment region is configured to display at least one piece of comment region information; and
displaying target comment region information in a first target region of the target interface, in a case of determining that the comment region information comprises the target comment region information, wherein the first target region comprises a region of the target interface other than the comment region and the control region.

8. The method according to claim 7, wherein that the comment region information comprises the target comment region information is determined by:
pulling target pin information stored in association with a target interface identifier of the target interface from a server, wherein the target pin information comprises at least one of the target comment region information and a target display position of the target comment region information; and
determining that the comment region information comprises the target comment region information in a case that the target pin information has been pulled, and
wherein the displaying the target comment region information comprises:
displaying the target comment region information based on the target pin information.

9. The method according to claim 7, wherein after displaying the target comment region information in the first target region of the target interface, the method further comprises:
receiving an interactive trigger operation on the target comment region information; and
displaying a target interactive panel for the target comment region information in response to the interactive trigger operation, wherein the target interactive panel comprises an interactive panel corresponding to the interactive trigger operation;
wherein the interactive trigger operation comprises at least one of a reply operation, a like operation, a forwarding operation and a favorite operation.

10. An information display apparatus, comprising:
a first display unit configured to display a target interface, wherein the target interface comprises a comment region and a control region, and the comment region is configured to display at least one piece of comment region information;
a first receiving unit configured to receive an information trigger operation on target comment region information in the comment region information; and
a second display unit configured to display the target comment region information in a first target region of the target interface in response to the information trigger operation, wherein the first target region comprises a region of the target interface other than the comment region and the control region.

11. An information display apparatus, comprising:
a third display unit configured to display a target interface, wherein the target interface comprises a comment region and a control region, and the comment region is configured to display at least one piece of comment region information; and
a fourth display unit configured to display target comment region information in a first target region of the target interface in a case of determining that the comment region information comprises the target comment region information, wherein the first target region comprises a region of the target interface other than the comment region and the control region.

12. An information display device, comprising:
a processor; and
a memory configured to store executable instructions;
wherein the processor is configured to read the executable instructions from the memory and execute the executable instructions to implement the information display method according to any one of claims 1 to 9.

13. A computer readable storage medium storing a computer program, wherein the computer program, when executed by a computing device, causes the computing device to implement the information display method according to any one of claims 1 to 9.
